# EUROPEAN PATENT SPECIFICATION

(11) **EP 3 894 828 B1**
(45) Date of publication and mention of the grant of the patent: **01.11.2023**
(21) Application number: 18836990.4
(22) Date of filing: 12.12.2018
(51) Int. Cl.: G01N 9/00, G01N 11/16

(54) **PLANAR VIBRATORY DENSITOMETER, DENSITOMETER MEMBER, AND RELATED METHOD**
PLANARES VIBRATIONSDENSITOMETER, DENSITOMETERELEMENT UND ENTSPRECHENDES VERFAHREN
DENSITOMÈTRE VIBRATOIRE PLAN, ÉLÉMENT DE DENSITOMÈTRE ET PROCÉDÉ ASSOCIÉ

(43) Date of publication of application: 20.10.2021
(73) Proprietor: Micro Motion, Inc., Boulder, CO 80301 (US)
(72) Inventor: MACDONALD, George Alexander, Wokingham Berkshire RG41 5SN (GB); GOFF, Jonathan James, Guildford Surrey GU2 8BQ (GB)
(74) Representative: Ellis, Christopher Paul
(86) International application number: PCT/US2018/065242
(87) International publication number: WO 2020/122899

(56) References cited:
- WO-A1-01/22056
- WO-A2-2012/166395
- DE-A1-102014 115 566
- US-A- 4 158 959
- US-A- 5 025 656
- US-A1- 2002 178 787
- US-A1- 2011 061 452
- US-A1- 2013 139 576

## Description

### TECHNICAL FIELD

The present invention relates to vibratory meters, and more particularly, to a method and apparatus for measuring density with a planar member.

### BACKGROUND OF THE INVENTION

Densitometers are generally known in the art and are used to measure a density of a fluid. The fluid may comprise a liquid, a gas, a liquid with suspended particulates and/or entrained gas, or combinations thereof. Vibratory densitometers typically operate by detecting motion of a vibrating element that vibrates in the presence of a fluid material to be measured. Properties associated with the fluid material, such as density, viscosity, temperature, and the like, can be determined by processing measurement signals received from motion transducers associated with the vibrating element. The vibration modes of the vibrating element system generally are affected by the combined mass, stiffness, and damping characteristics of the vibrating element and the surrounding fluid material.

Vibrating densitometers can comprise a vibrating member, such as a cylinder that is exposed to a fluid under test. One example of a vibrating densitometer comprises a cylindrical conduit that is cantilever-mounted, with an inlet end coupled to an existing pipeline or other structure and with the outlet end free to vibrate. The conduit can be vibrated and a resonant frequency can be measured. As is generally known in the art, the density of the fluid under test can be determined by measuring a resonant frequency of the conduit in the presence of a fluid. According to well-known principles, the resonant frequency of the conduit will vary inversely with the density of the fluid that is contacting the conduit. Patent applications US 2002/178787 A1 and US 4,158,959 A disclose prior art vibrating densitometers.

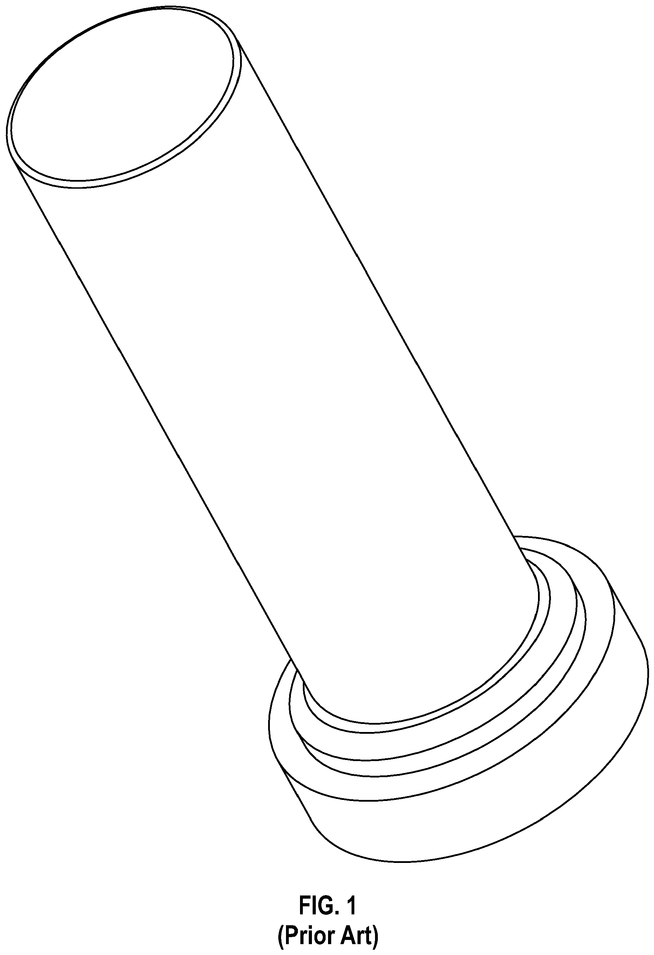

FIG. 1 shows a prior art vibrating cylinder of a vibrating gas densitometer. The prior art round vibrating cylinder may be vibrated at or near to a natural (i.e., resonant) frequency. By measuring a resonant frequency of the cylinder in a presence of a gas, the density of the gas can be determined. The prior art vibrating cylinder may be formed of metal and is ideally constructed of a uniform thickness so that variations and/or imperfections in the cylinder wall do not affect the resonant frequency of the vibrating cylinder.

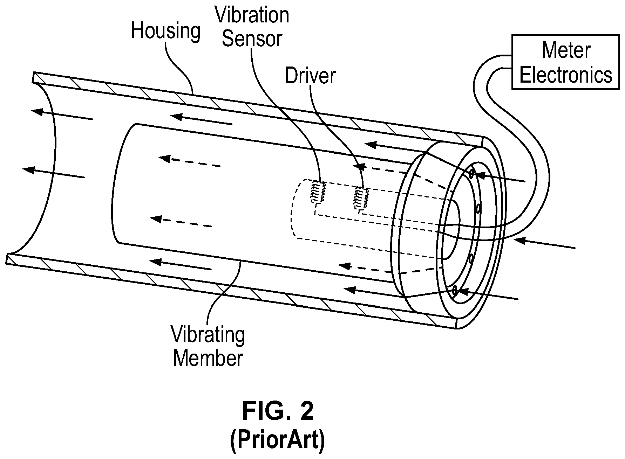

FIG. 2 illustrates a prior art densitometer. The prior art densitometer includes a cylindrical vibrating member located at least partially within a housing. The housing or the vibrating member may include flanges or other members for operatively coupling the densitometer to a pipeline or similar fluid delivering device in a fluid-tight manner. In the example shown, the vibrating member is cantilever-mounted to the housing at an inlet end, leaving the opposite end free to vibrate. The vibrating member includes a plurality of fluid apertures that allow fluid to enter the densitometer and flow between the housing and the vibrating member. Therefore, the fluid contacts the inside as well as the outside surfaces of the vibrating member. This is particularly helpful when the fluid under test comprises a gas, as a greater surface area is exposed to the gas. In other examples, apertures may be provided in the housing and the vibrating member apertures may not be required.

A driver and a vibration sensor are positioned within the cylinder. The driver receives a drive signal from a meter electronics and vibrates the vibrating member at or near a resonant frequency. The vibration sensor detects the vibration of the vibrating member and sends the vibration information to the meter electronics for processing. The meter electronics determines the resonant frequency of the vibrating member and generates a density measurement from the measured resonant frequency.

To obtain accurate density measurements, the resonant frequency must be very stable. One prior art approach to achieve the desired stability is to vibrate the vibrating member in a radial vibration mode. In a radial vibration mode, the longitudinal axis of the vibrating member remains essentially stationary while at least a part of the vibrating member's wall translates and/or rotates away from its rest position. A key design criterion for a gas density cylinder is the separation the vibration mode shapes so that the mode shapes can be easily and accurately discriminated. If the vibrating member has a perfectly round cross-sectional shape and has a perfectly uniform wall thickness, there is only one three-lobed radial vibration mode. However, due to design tolerances, this is usually not achievable. Consequently, when a manufacturer attempts to make a perfectly round vibrating member with a perfectly uniform wall thickness, small imperfections result in two three-lobed radial vibrations that vibrate at two vibration modes that are very close to one another in frequency. The frequency separation between the two modes is typically very small and may be less than one Hertz, for example. With the two frequencies close together, a density determination may be difficult or impossible. It will therefore be recognized that manufacturing of such precise cylindrical members is challenging and costly.

To facilitate manufacturing and reduce costs, the present embodiments provide densitometers having a planar resonator. The ability to use a planar resonator is advantageous because such members could be manufactured easily from thin sheet metal using, for example, chemical machining processes, laser machining/cutting, or even stamping. Therefore the fabrication cost could be significantly lower than a precision machined vibrating cylinder, the manufacturing process would be expedited, overall costs would be significantly lower, and the end product could be significantly smaller. An advancement in the art is thus realized.

### SUMMARY OF THE INVENTION

A planar vibratory member operable for use in a vibrating densitometer is provided according to an embodiment. The planar vibratory member comprises a body and a vibratable portion emanating from the body. The vibratable portion comprises a plurality of vibratable projections, and the plurality of vibratable projections are cantilevered, wherein the plurality of vibratable projections comprise an inner paddle nested within an outer paddle. The vibratable portion is operable to be vibrated by a driver.

A densitometer operable to determine a density of a fluid is provided according to an embodiment. The densitometer comprises a driver and a planar vibratory member vibratable by the driver, comprising a body and a vibratable portion emanating from the body. The vibratable portion comprises a plurality of vibratable projections, and the plurality of vibratable projections are cantilevered, wherein the plurality of vibratable projections comprise an inner paddle nested within an outer paddle. At least one pickoff sensor is configured to detect vibrations of the vibratory member. Meter electronics is provided that comprises an interface configured to send an excitation signal to the driver and to receive a vibrational response from the at least one pickoff sensor, and to measure a density of the fluid therein.

A method for operating a vibratory densitometer is provided according to an embodiment. A vibratory densitometer is provided that comprises meter electronics in communication with at least one coil. A vibratory member is vibrated by the at least one coil, wherein the vibratory member comprises a plurality of vibratable projections that comprise an inner paddle nested within an outer paddle. An excitation signal is received by the at least one coil. A detection signal is output from the at least one coil, wherein the at least one coil is operable to alternately act as either a driver or pickoff. A timing of the excitation signal and the detection signal is controlled with a switching circuit with the meter electronics, such that the excitation signal is provided to the at least one coil by meter electronics, followed by meter electronics receiving a detection signal from the at least one coil.

### ASPECTS

According to an aspect, a planar vibratory member operable for use in a vibrating densitometer is provided. The planar vibratory member comprises a body and a vibratable portion emanating from the body. The vibratable portion comprises a plurality of vibratable projections, and the plurality of vibratable projections are cantilevered, wherein the plurality of vibratable projections comprise an inner paddle nested within an outer paddle. The vibratable portion is operable to be vibrated by a driver.

Preferably, a border of the body surrounds the vibratable portion.

Preferably, the vibratable portion is magnetically drivable.

According to an aspect, a densitometer operable to determine a density of a fluid is provided. The densitometer comprises a driver and a planar vibratory member vibratable by the driver, comprising a body and a vibratable portion emanating from the body. The vibratable portion comprises a plurality of vibratable projections, and the plurality of vibratable projections are cantilevered, wherein the plurality of vibratable projections comprise an inner paddle nested within an outer paddle. At least one pickoff sensor is configured to detect vibrations of the vibratory member. Meter electronics is provided that comprises an interface configured to send an excitation signal to the driver and to receive a vibrational response from the at least one pickoff sensor, and to measure a density of the fluid therein.

According to an aspect, a method for operating a vibratory densitometer is provided. A vibratory densitometer is provided that comprises meter electronics in communication with at least one coil. A vibratory member is vibrated by the at least one coil, wherein the vibratory member comprises a plurality of vibratable projections that comprise an inner paddle nested within an outer paddle. An excitation signal is received by the at least one coil. A detection signal is output from the at least one coil, wherein the at least one coil is operable to alternately act as either a driver or pickoff. A timing of the excitation signal and the detection signal is controlled with a switching circuit with the meter electronics, such that the excitation signal is provided to the at least one coil by meter electronics, followed by meter electronics receiving a detection signal from the at least one coil.

The vibratory member is planar, and the plurality of vibratable projections are cantilevered.

Preferably, the at least one coil comprises a first coil and a second coil, and wherein the first and second coil are operable to receive simultaneous excitation signals, drive the vibratory member, detect a signal from the vibratory member, and provide simultaneous detection signals.

Preferably, the first coil and the second coil are magnetically opposed.

Preferably, the method comprises the step of gating the detection signal to ignore signal noise during coil excitation.

Preferably, the at least one coil comprises a single coil, wherein the single coil is operable to receive excitation signals, drive the vibratory member, detect a signal from the vibratory member, and provide detection signals.

### BRIEF DESCRIPTION OF THE DRAWINGS

FIG. 1 shows a prior art vibrating cylinder of a vibrating gas densitometer;
FIG. 2 shows a prior art densitometer;
FIGS. 3a and 3b illustrate an embodiment of a vibratory member for a densitometer;
FIGS. 4a and 4b illustrate another embodiment of a vibratory member for a densitometer;
FIG. 5 illustrates a portion of a densitometer according to an embodiment;
FIG. 6 illustrates another portion of a densitometer according to an embodiment;
FIG. 7 illustrates meter electronics according to an embodiment;
FIGS. 8a and 8b illustrate meter electronics according to an embodiment; and
FIG. 9 illustrates implementation of a densitometer according to an embodiment.

### DETAILED DESCRIPTION OF THE INVENTION

FIGS. 1-9 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims and their equivalents.

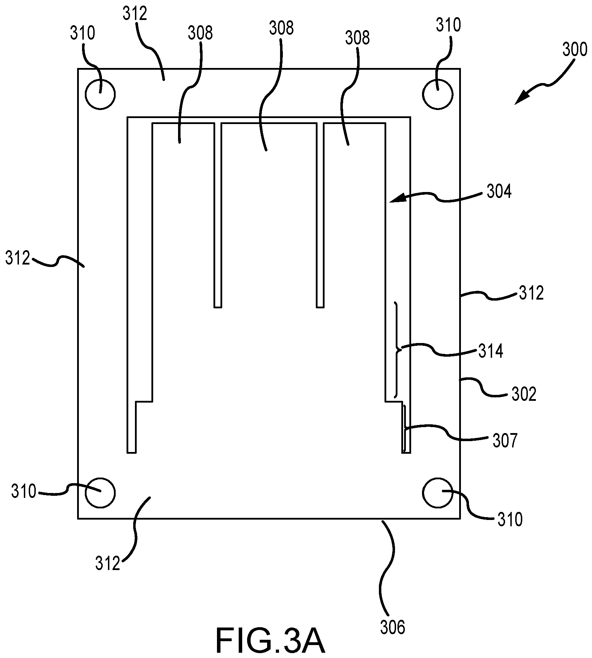

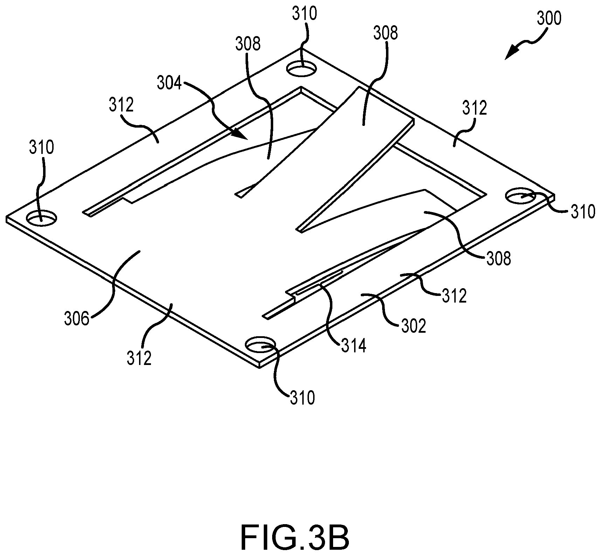

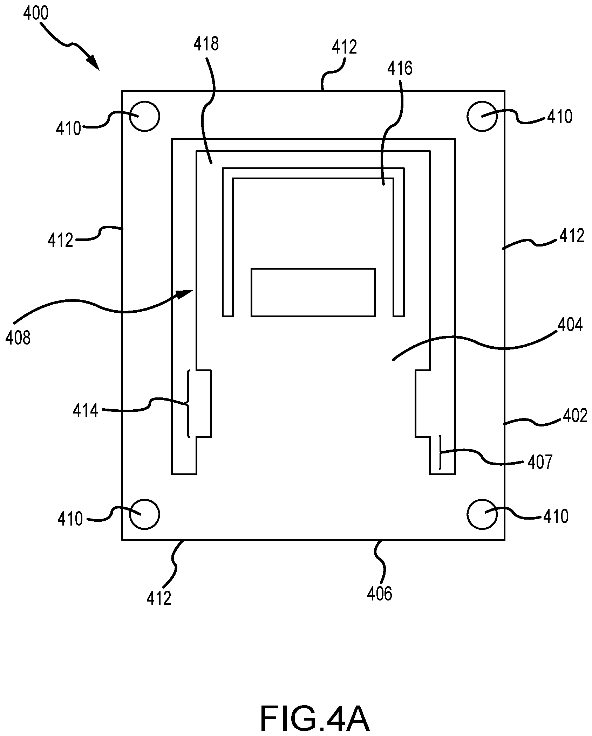

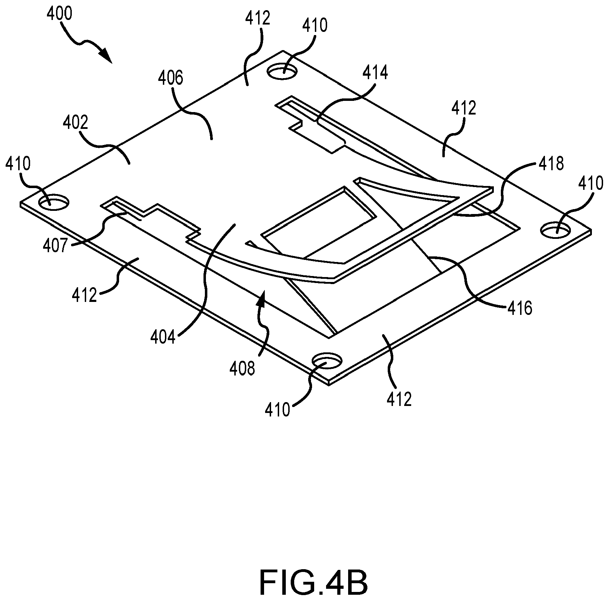

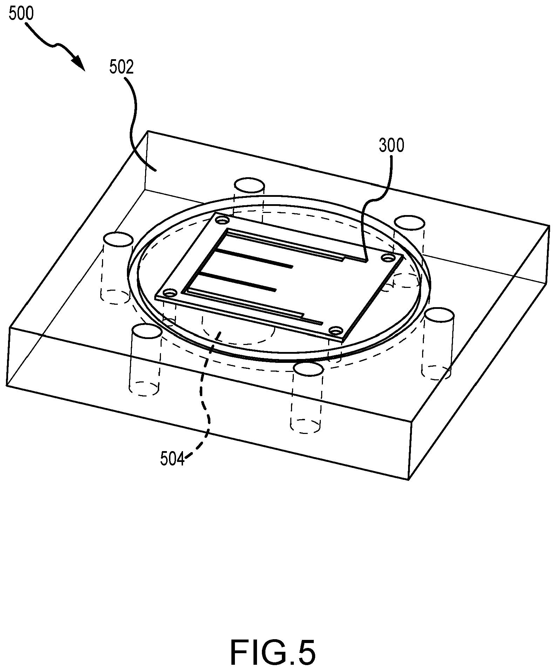

**FIGS. 3a****,** **3b****,** **4a****, and** **4b** illustrate vibratory members 300, 400 for a densitometer 500 (see FIG. 5). The vibratory members 300, 400 may be vibrated at, or near to, a natural (i.e., resonant) frequency. By measuring such a frequency of the vibratory members 300, 400 in a presence of a fluid, the density of the fluid can be determined, as will be understood by those skilled in the art. The vibratory members 300, 400 may be formed of metal and constructed of a uniform thickness so that variations and/or imperfections in the member's wall minimally affect the resonant frequency of the vibratory members 300, 400.

FIGS. 3a and 3b illustrate an embodiment of the vibratory member 300 that comprises a triple beam structure. A body 302 of the vibratory member 300 supports a vibratable portion 304. The vibratable portion 304 is cantilevered, being only supported by a single end 306. A plurality of vibratable beams 308 project from the end 306 and are free to oscillate upon vibratory excitation. The plurality of vibratable beams 308 comprises at least two beams. Three beams are illustrated herein as an example. The size of the beams may be consistent, or beams may differ in shape and/or dimension. In the embodiment illustrated, the end 306 comprises a member that projects from a border 312 of the body. In an embodiment, the end 306 and the border 312 of the body 302 comprise the same portion. In the embodiment illustrated, the beams 308 project from a common region 314. In another embodiment, the beams 308 project from an end 306 region. FIG 3b illustrates the beams 308 undergoing a vibratory motion.

Mounting holes 310 may be present to allow the vibratory member 300 to be fastened to a portion of a densitometer 500 (see FIG. 5). It will be appreciated that holes, notches, beams, indexing features, or any other feature may be used to secure the vibratory member 300 to a portion of a densitometer 500, and in some embodiments no mounting feature may be necessary at all, such as in the case where the vibratory member 300 may be sandwiched between portions of a densitometer 500, for example.

**FIGS. 4a** **and** **4b** illustrate an embodiment of the vibratory member 400 that comprises a balanced paddle structure. A body 402 of the vibratory member 400 supports a vibratable portion 404. The vibratable portion 404 is cantilevered, being only supported by a single end 406. Vibratable paddles 408 project from the end 406 and are free to oscillate upon vibratory excitation. In the embodiment illustrated, the end 406 comprises a member that projects from a border 412 of the body. In an embodiment, the end 406 and the border 412 of the body 402 comprise the same portion. In the embodiment illustrated, the paddles 408 project from a common region 414. In another embodiment, the paddles 408 project from an end region 407. An inner paddle 416 is nested within an outer paddle 418. FIG 4b illustrates the paddles 408 undergoing a vibratory motion.

Mounting holes 410 may be present to allow the vibratory member 400 to be fastened to a portion of a densitometer 500 (see FIG. 5). It will be appreciated that holes, notches, beams, indexing features, or any other feature may be used to secure the vibratory member 400 to a portion of a densitometer 500, and in some embodiments no mounting feature may be necessary at all, such as in the case where the vibratory member 400 may be sandwiched between portions of a densitometer 500, for example.

The vibratory members 300, 400 each illustrate a single ended (i.e. cantilevered) structure. The advantage of a single ended structure is that it is substantially insensitive to stresses which can arise in the mounting arrangement of the bodies 302, 402, whereas a double ended structure, devoid of a cantilever, can experience tensile stresses due to mounting or temperature gradient effects. On the other hand, a double ended structure can be more robust and less sensitive to orientation effects which arise from the earth's gravitational pull on the resonator, so although not illustrated are contemplated as embodiments of vibratory members.

The balanced paddle vibratory member 400 provides an advantage in that the surface area of the inner paddle is proportionately relatively large, so vibratory excitation and detection may be easier-especially in embodiments where the vibratory member 400 is physically relatively small. It also has the advantage that proportionately lower operating frequencies can be achieved.

**FIG. 5** illustrates a densitometer 500 having a vibratory member 300, 400 located at least partially within a housing 510. In the illustration, vibratory member 300 is illustrated for an example. Any other vibratory member geometry may be provided, however. According to an embodiment, the densitometer 500 includes the vibratory member 300 inside a housing (not shown for clarity). The vibratory member 300, 400 may be permanently or removably affixed to a base 502. In an embodiment, the border 312, 412 regions are secured to the base in a substantially rigid fashion. In an embodiment, portions of the base 502 sandwich the vibratory member therebetween proximate the border 312, 412, yet still allow the vibratable portion 304, 404 to vibrate. The fluid to be quantified may be introduced into, or may be passed through conduits in the base (not shown) such that the fluid under test is in contact with the vibratable portion 304, 404 of the vibratory member 300, 400.

The base 502 may include flanges or other members for operatively coupling the densitometer to a pipeline or similar fluid delivering device in a fluid-tight manner.

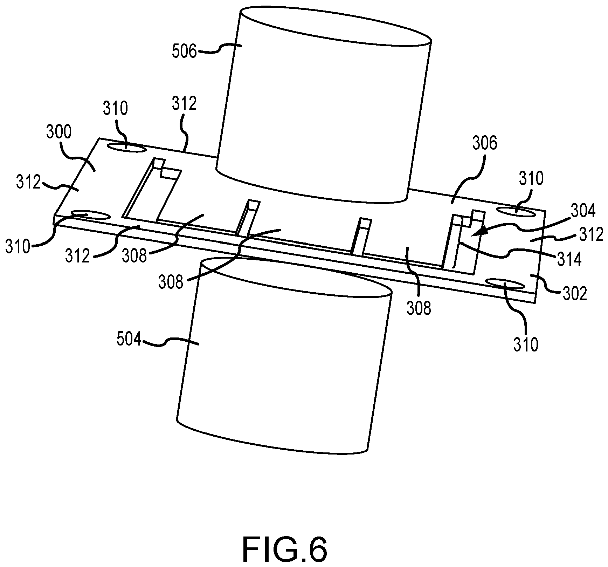

A driver 504 and a vibration sensor (pickoff) 506 (see FIG. 6) are positioned proximate the vibratory member 300, 400. The driver 504 receives a drive signal from a meter electronics and vibrates the vibratory member 300, 400 at or near a resonant frequency. The vibration sensor 506 detects the vibration of the vibratory member 300, 400 and sends the vibration information to the meter electronics for processing. The meter electronics determines the resonant frequency of the vibratory member 300, 400 and generates a density measurement from the measured resonant frequency.

Excitation and detection of a vibratory member 300, 400 can be challenging-especially as the size of the resonator is reduced. Ideally excitation and detection is non-contact because attaching transducers such as piezoelectric elements can only have the effect of degrading the resonance. Using electrostatic excitation and detection, or electromagnetic excitation and detection, is generally difficult because the excitation transducer and detection transducer are close together, and as a consequence there will be direct capacitive or direct transformer coupling between the two. This cross coupling can degrade the detection signal and in worst case can completely overwhelm the detection signal so that the electronics cannot identify the resonance. To avoid this cross-coupling, in an embodiment different methods for excitation and detection are utilized. For example, in an embodiment electromagnetic excitation and optical detection is utilized, or vice versa.

**FIG. 6** discloses a driver 504 and pickoff 506 orientation about a vibratory member 300, 400. The base 502 and densitometer 500 in general are omitted for clarity. The driver 504 is adapted to vibrate the vibratory member 300, 400 in one or more vibration modes. The driver 504 may be positioned at any desired location proximate the vibratable portion 304, 404. According to an embodiment, the driver 504 can receive an electrical signal from the meter electronics. In the embodiment shown, the at least one vibration sensor 506 is coaxially aligned with the driver 504. In other embodiments, the at least one vibration sensor 506 may be coupled to the vibratory member 300, 400 in other locations. For example, the at least one vibration sensor 506 may be located on an outer surface of the vibratory member 300, 400.

The at least one vibration sensor 506 can transmit a signal to the meter electronics. The meter electronics can process the signals received by the at least one vibration sensor 506 to determine a resonant frequency of the vibratory member 300, 400. In an embodiment, the driver 504 and vibration sensor 506 are magnetically coupled to the vibratory member 300, 400, thus the driver 504 induces vibrations in the vibratory member 300, 400 via a magnetic field, and the vibration sensor 506 detects vibrations of the vibratory member 300, 400 via changes in a proximate magnetic field. If a fluid under test is present, the resonant frequency of the vibratory member 300, 400 will change inversely proportionally to the fluid density as is known in the art. The proportional change may be determined during an initial calibration, for example. In the embodiment shown, the at least one vibration sensor 506 comprises a coil. The driver 504 receives a current to induce a vibration in the vibratory member 300, 400, and the at least one vibration sensor 506 uses the motion of the vibratory member 300, 400 created by the driver 504 to induce a voltage. Coil drivers and sensors are well known in the art and a further discussion of their operation is omitted for brevity of the description. Furthermore, it should be appreciated that the driver 504 and the at least one vibration sensor 506 are not limited to coils, but rather may comprise a variety of other well-known vibrating components, such as piezo-electric sensors, strain gages, optical or laser sensors, etc., for example. Therefore, the present embodiment should in no way be limited to electromagnetic drivers and sensors. Furthermore, those skilled in the art will readily recognize that the particular placement of the driver 504 and the at least one vibration sensor 506 can be altered while remaining within the scope of the present embodiments.

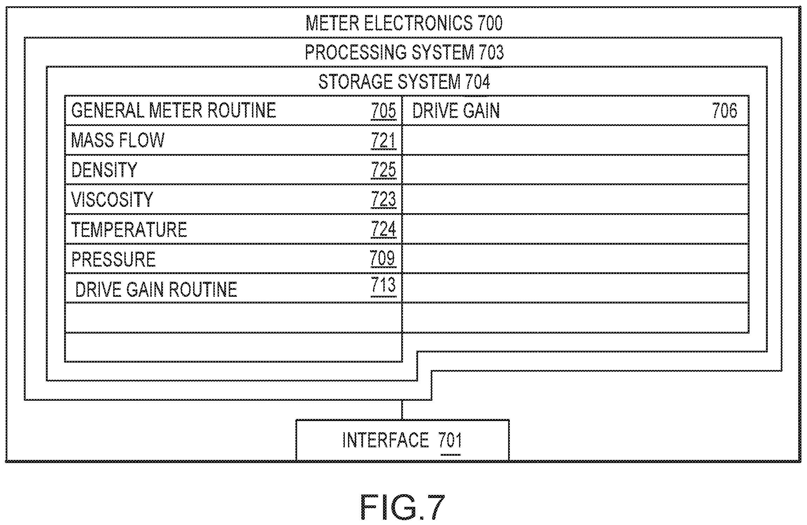

**FIG. 7** is a block diagram of the meter electronics 700 according to an embodiment. In operation, the densitometer 500 provides various measurement values that may be outputted including one or more of a measured or averaged value of density, mass flow rate, volume flow rate, individual flow component mass and volume flow rates, and total flow rate, including, for example, both volume and mass flow of individual flow components.

The densitometer 500 generates a vibrational response. The vibrational response is received and processed by the meter electronics 700 to generate one or more fluid measurement values. The values can be monitored, recorded, saved, totaled, and/or output.

The meter electronics 700 includes an interface 701, a processing system 703 in communication with the interface 701, and a storage system 704 in communication with the processing system 703. Although these components are shown as distinct blocks, it should be understood that the meter electronics 700 can be comprised of various combinations of integrated and/or discrete components.

The interface 701 may be configured to couple to the leads and exchange signals with the driver 504, pickoffs 506 and temperature sensors (not shown), for example. The interface 701 may be further configured to communicate over a communication path to external devices.

The processing system 703 can comprise any manner of processing system. The processing system 703 is configured to retrieve and execute stored routines in order to operate the densitometer 500. The storage system 704 can store routines including a general meter routine 705. The storage system 704 can store measurements, received values, working values, and other information. In some embodiments, the storage system stores a mass flow (m) 721, a density (ρ) 725, a viscosity (µ) 723, a temperature (T) 724, a pressure 709, a drive gain 706, and any other variables known in the art. Other measurement/processing routines are contemplated and are within the scope of the description and claims.

The general meter routine 705 can produce and store fluid quantifications and flow measurements. These values can comprise substantially instantaneous measurement values or can comprise totalized or accumulated values. For example, the general meter routine 705 can generate mass flow measurements and store them in the mass flow 721 storage of the storage system 704, for example. Similarly, the general meter routine 705 can generate density measurements and store them in the density 725 storage of the storage system 704, for example. The mass flow 721 and density 725 values are determined from the vibrational response, as previously discussed and as known in the art. The density and other measurements can comprise a substantially instantaneous value, can comprise a sample, can comprise an averaged value over a time interval, or can comprise an accumulated value over a time interval. The time interval may be chosen to correspond to a block of time during which certain fluid conditions are detected, for example, a liquid-only fluid state, or alternatively, a fluid state including liquids, entrained gas, and/or solids, and/or solutes. In addition, other mass and volume flow and related quantifications are contemplated and are within the scope of the description and claims.

The meter electronics 700 may be coupled to a path or other communication link. The meter electronics 700 may communicate density measurements over the path. The meter electronics 700 may also transmit any manner of other signals, measurements, or data over the path. In addition, the meter electronics 700 may receive instructions, programming, other data, or commands via the path.

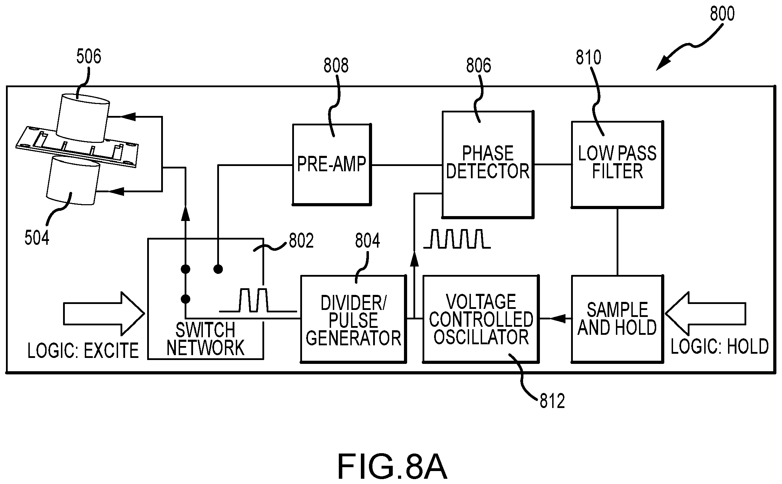

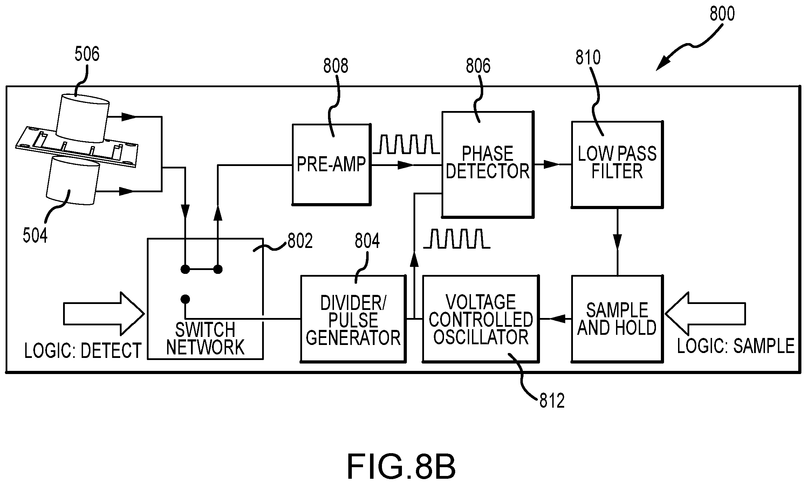

**FIGS 8a** **and** **8b** illustrate an embodiment of meter electronics 700 for overcoming the problem of cross-coupling. A switching circuit 800 implementation, shown schematically in FIGS. 8a and 8b, shows two coils that are excited and used as detectors in unison, but in this implementation the wiring to the coils is formed such that magnetic fields are in opposition. In this way, substantially no static force is on the resonator, and the excitation force is approximately doubled. Similarly, detection signal is approximately doubled. FIG. 8a illustrates an excitation mode, wherein a switch network 802 directs a pulse generator 804 to provide a drive signal to the one or more coils. FIG. 8b illustrates a detection mode, wherein the switch network 802 directs a signal from the coil to a phase detector 806 to provide a drive signal to the one or more coils. Other components such as pre-amplifiers 808, filters 810, oscillators, 812, and other components known in the art are contemplated. The switching circuit 800 could also allow a single electromagnetic coil to be used alternately for excitation and detection in an embodiment. This eliminates the need for multiple coils.

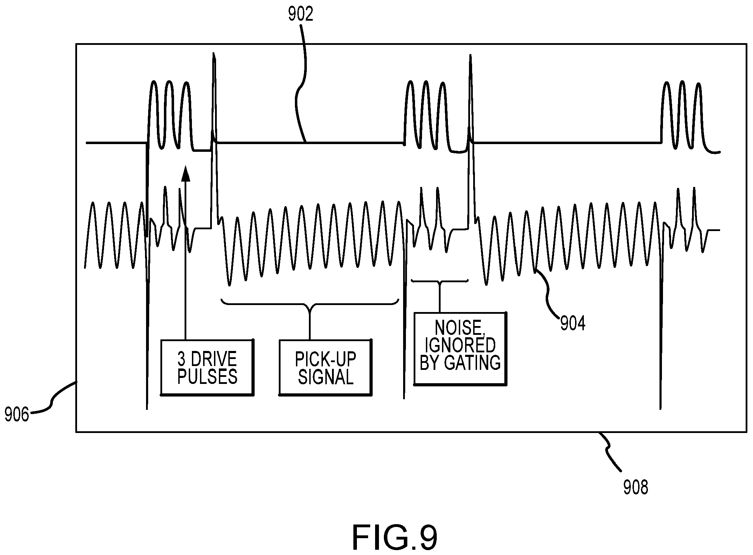

**FIG. 9** illustrates oscilloscope traces of an implementation of an embodiment of a densitometer 500 operating a switching circuit 800. The upper trace 902 shows a burst of three excitation pulses directed to the coil, which in turn excite a vibratory member 300, 400. The lower trace 904 is the signal received by the coil as a result of the excitation pulses. Due to the fact that the method is more complex than continuously operating a drive circuit and a detection circuit, it is theoretically possible that the frequency or time period would not be as stable, but the results illustrated indicate that a time period stability of approximately +/- 0.5ns was achieved. The vertical axis 906 shows a time period, the horizontal axis 908 shows a number of samples over a time period. In some embodiments, electronic gating may be provided that may ignore noise and or remnant signals from previous excitement/detection cycles. These are merely examples that indicate the functionality of a switching circuit, and alternate drive and detection cycles. The actual trace shapes and timing values/intensities/frequencies/etc. will differ based upon densitometer 500 construction, size, fluid under test, etc., and are in no way limiting.

The detailed descriptions of the above embodiments are not exhaustive descriptions of all embodiments contemplated by the inventors to be within the scope of the invention. Indeed, persons skilled in the art will recognize that certain elements of the above-described embodiments may variously be combined or eliminated to create further embodiments, and such further embodiments fall within the scope and teachings of the invention. It will also be apparent to those of ordinary skill in the art that the above-described embodiments may be combined in whole or in part to create additional embodiments within the scope and teachings of the invention.

Thus, although specific embodiments of, and examples for, the invention are described herein for illustrative purposes, various equivalent modifications are possible within the scope of the invention, as those skilled in the relevant art will recognize. The teachings provided herein can be applied to other vibrating systems, and not just to the embodiments described above and shown in the accompanying figures. Accordingly, the scope of the invention should be determined from the following claims.

## Claims

1. A planar vibratory member (300, 400) operable for use in a vibrating densitometer (500), comprising:
a body (302); and
a vibratable portion (304) emanating from the body (302), wherein the vibratable portion (304) comprises a plurality of vibratable projections, and wherein the plurality of vibratable projections are cantilevered, wherein the plurality of vibratable projections comprise an inner paddle (416) nested within an outer paddle (418);
wherein the vibratable portion is operable to be vibrated by a driver (504).

2. The planar vibratory member (300, 400) of claim 1, wherein a border (312) of the body (302) surrounds the vibratable portion (304).

3. The planar vibratory member (300, 400) of claim 1, wherein the vibratable portion (304) is magnetically drivable.

4. A densitometer (500) operable to determine a density of a fluid therein, comprising:
a driver (504);
a planar vibratory member (300, 400) according to claim 1 and vibratable by the driver (504);
at least one pickoff sensor (506) configured to detect vibrations of the vibratory member (300, 400);
meter electronics (700) comprising an interface (701) configured to send an excitation signal to the driver (504) and to receive a vibrational response from the at least one pickoff sensor (506), and to measure a density (725) of the fluid therein.

5. A method for operating a vibratory densitometer comprising the steps of:
providing a vibratory densitometer comprising a planar vibratory member (300, 400) according to claim 1 and meter electronics in communication with at least one coil;
vibrating the vibratory member by the at least one coil;
receiving an excitation signal by the at least one coil;
outputting a detection signal from the at least one coil, wherein the at least one coil is operable to alternately act as either a driver or pickoff;
controlling a timing of the excitation signal and the detection signal with a switching circuit with the meter electronics, such that the excitation signal is provided to the at least one coil by meter electronics, followed by meter electronics receiving a detection signal from the at least one coil.

6. 7. The method for operating a vibratory densitometer of claim 5, wherein the at least one coil comprises a first coil and a second coil, and wherein the first and second coil are operable to:
receive simultaneous excitation signals;
drive the vibratory member;
detect a signal from the vibratory member; and
provide simultaneous detection signals.

7. The method for operating a vibratory densitometer of claim 5, wherein the first coil and the second coil are magnetically opposed.

8. The method for operating a vibratory densitometer of claim 5, comprising the step of gating the detection signal to ignore signal noise during coil excitation.

9. The method for operating a vibratory densitometer of claim 5, wherein the at least one coil comprises a single coil, wherein the single coil is operable to:
receive excitation signals;
drive the vibratory member;
detect a signal from the vibratory member; and
provide detection signals.

## Patentansprüche

1. Planares Schwingungselement (300, 400), das zur Verwendung in einem schwingungsfähigen Densitometer (500) betreibbar ist und Folgendes umfasst:
einen Körper (302); und
einen schwingungsfähigen Abschnitt (304), der von dem Körper (302) ausgeht, wobei der schwingungsfähige Abschnitt (304) eine Vielzahl von schwingungsfähigen Vorsprüngen umfasst und wobei die Vielzahl von schwingungsfähigen Vorsprüngen freitragend ist, wobei die Vielzahl der schwingfähigen Vorsprünge ein inneres Paddel (416) umfasst, das in einem äußeren Paddel (418) verschachtelt ist;
wobei der schwingungsfähige Abschnitt durch einen Treiber (504) in Schwingung versetzt werden kann.

2. Planares Schwingungselement (300, 400) nach Anspruch 1, wobei ein Rand (312) des Körpers (302) den schwingungsfähigen Abschnitt (304) umgibt.

3. Planares Schwingungselement (300, 400) nach Anspruch 1, wobei der schwingungsfähige Abschnitt (304) magnetisch antreibbar ist.

4. Densitometer (500) zum Bestimmen der Dichte eines Fluids, das Folgendes umfasst:
einen Treiber (504);
ein planares Schwingungselement (300, 400) nach Anspruch 1, das durch den Treiber (504) in Schwingung versetzt werden kann;
mindestens einen Abnehmersensor (506), der dafür konfiguriert ist, Schwingungen des Schwingungselements (300, 400) zu erfassen;
eine Zählerelektronik (700), die eine Schnittstelle (701) umfasst, die dafür konfiguriert ist, ein Erregungssignal an den Treiber (504) zu senden und eine Schwingungsantwort von dem mindestens einen Abnehmersensor (506) zu empfangen und eine Dichte (725) des Fluids darin zu messen.

5. Verfahren zum Betreiben eines Schwingungsdensitometers, das folgende Schritte umfasst:
Bereitstellen eines Schwingungsdensitometers, das ein planares Schwingungselement (300, 400) nach Anspruch 1 und eine mit mindestens einer Spule kommunizierende Messvorrichtungselektronik umfasst;
Vibrieren des Schwingungselements durch die mindestens eine Spule;
Empfangen eines Erregungssignals durch die mindestens eine Spule;
Ausgeben eines Erfassungssignals von der mindestens einen Spule, wobei die mindestens eine Spule so betrieben werden kann, dass sie abwechselnd entweder als Treiber oder als Abnehmer fungiert;
Steuern eines Timings des Erregungssignals und des Erfassungssignals mit einem Schaltkreis mit der Zählerelektronik, so dass das Erregungssignal von der Zählerelektronik an die mindestens eine Spule geliefert wird, gefolgt vom Empfang eines Erfassungssignals von der mindestens einen Spule durch die Zählerelektronik.

6. Verfahren zum Betreiben eines Schwingungsdensitometers nach Anspruch 5, wobei die mindestens eine Spule eine erste Spule und eine zweite Spule umfasst und wobei die erste und die zweite Spule für Folgendes betreibbar sind:
Empfangen von gleichzeitigen Erregungssignalen;
Antreiben des Schwingungselements;
Erfassen eines Signals von dem Schwingungselement; und
Liefern von gleichzeitigen Erfassungssignalen.

7. Verfahren zum Betreiben eines Schwingungsdensitometers nach Anspruch 5, wobei die erste Spule und die zweite Spule magnetisch entgegengesetzt sind.

8. Verfahren zum Betreiben eines Schwingungsdensitometers nach Anspruch 5, das den Schritt des Taktens des Erfassungssignals umfasst, um Signalrauschen während der Spulenerregung zu ignorieren.

9. Verfahren zum Betreiben eines Schwingungsdensitometers nach Anspruch 5, wobei die mindestens eine Spule eine einzelne Spule umfasst, wobei die einzelne Spule für Folgendes betreibbar ist:
Empfangen von Erregungssignalen;
Antreiben des Schwingungselements;
Erfassen eines Signals von dem Schwingungselement; und
Liefern von Erfassungssignalen.

## Revendications

1. Élément vibratoire plan (300, 400) fonctionnel pour être utilisé dans un densitomètre vibrant (500), comprenant :
un corps (302) ; et
une partie vibrante (304) émanant du corps (302), la partie vibrante (304) comprenant une pluralité de protubérances vibrantes, la pluralité de protubérances vibrantes étant en porte-à-faux et la pluralité de protubérances vibrantes comprenant une ailette intérieure (416) imbriquée dans une ailette extérieure (418) ;
la partie vibrante étant fonctionnelle pour être mise en vibration par un excitateur (504).

2. Élément vibratoire plan (300, 400) selon la revendication 1, dans lequel une bordure (312) du corps (302) entoure la partie vibrante (304).

3. Élément vibratoire plan (300, 400) selon la revendication 1, dans lequel la partie vibrante (304) peut être excitée magnétiquement.

4. Densitomètre (500) fonctionnel pour déterminer une masse volumique d'un fluide s'y trouvant, le densitomètre comprenant :
un excitateur (504) ;
un élément vibratoire plan (300, 400) selon la revendication 1 et pouvant être mis en vibration par l'excitateur (504) ;
au moins un capteur de mesure (506) configuré pour détecter des vibrations de l'élément vibratoire (300, 400) ;
une électronique de comptage (700) comprenant une interface (701) configurée pour envoyer un signal d'excitation à l'excitateur (504) et pour recevoir une réponse vibratoire en provenance de l'au moins un capteur de mesure (506), et pour y mesurer une masse volumique (725) du fluide.

5. Procédé de fonctionnement d'un débitmètre vibratoire, comprenant les étapes consistant à :
fournir un densitomètre vibratoire comprenant un élément vibratoire plan (300, 400) selon la revendication 1 et une électronique de comptage en communication avec au moins une bobine ;
faire vibrer l'élément vibratoire par l'au moins une bobine ;
recevoir un signal d'excitation par l'au moins une bobine ;
délivrer un signal de détection en sortie de l'au moins une bobine, l'au moins une bobine étant fonctionnelle pour agir en alternance comme un excitateur ou comme un capteur de mesure ;
commander une durée du signal d'excitation et du signal de détection à l'aide d'un circuit de commutation de l'électronique de comptage, de telle sorte que le signal d'excitation soit fourni à l'au moins une bobine par l'électronique de comptage, puis recevoir, par l'électronique de comptage, un signal de détection en provenance de l'au moins une bobine.

6. Procédé de fonctionnement d'un densitomètre vibratoire selon la revendication 5, dans lequel l'au moins une bobine comprend une première bobine et une seconde bobine, et dans lequel les première et seconde bobines sont fonctionnelles pour :
recevoir des signaux d'excitation simultanés ;
exciter l'élément vibratoire ;
détecter un signal en provenance de l'élément vibratoire ; et
fournir des signaux de détection simultanés.

7. Procédé de fonctionnement d'un densitomètre vibratoire selon la revendication 5, dans lequel la première bobine et la seconde bobine sont magnétiquement opposées.

8. Procédé de fonctionnement d'un densitomètre vibratoire selon la revendication 5, comprenant l'étape consistant à déclencher le signal de détection pour ignorer un bruit de signal pendant l'excitation des bobines.

9. Procédé de fonctionnement d'un densitomètre vibratoire selon la revendication 5, dans lequel l'au moins une bobine comprend une seule bobine, la seule bobine étant fonctionnelle pour :
recevoir des signaux d'excitation ;
exciter l'élément vibratoire ;
détecter un signal en provenance de l'élément vibratoire ; et
fournir des signaux de détection.
